(19) Europäisches Patentamt
European Patent Office
Office européen des brevets

(11) **EP 1 669 753 B1**

(12) **EUROPEAN PATENT SPECIFICATION**

(45) Date of publication and mention
of the grant of the patent:
**19.09.2007 Bulletin 2007/38**

(51) Int Cl.:
*G01N 30/86* (2006.01)    *G01N 27/447* (2006.01)

(21) Application number: **05111587.1**

(22) Date of filing: **15.12.2004**

(54) **Peak pattern calibration**

Kalibration von Peak-Pattern

Calibration de structures en pics

(84) Designated Contracting States:
**CH DE FR GB LI**

(43) Date of publication of application:
**14.06.2006 Bulletin 2006/24**

(62) Document number(s) of the earlier application(s) in
accordance with Art. 76 EPC:
**04106605.1 / 1 600 771**

(73) Proprietor: **Agilent Technologies, Inc.**
**Santa Clara, CA 95051 (US)**

(72) Inventor: **Jaeger, Rainer**
**76131, Karlsruhe (DE)**

(74) Representative: **Barth, Daniel Mathias et al**
**c/o Agilent Technologies Deutschland GmbH,**
**Patentabteilung,**
**Herrenbergerstrasse 130**
**71034 Böblingen (DE)**

(56) References cited:
**US-A- 5 119 315**

• **PARRISH M E ET AL: "Computer-Enhanced High-Resolution Gas Chromatography for the Discriminative Analysis of Tobacco Smoke" ANAL. CHEM., vol. 53, no. 6, May 1981 (1981-05), pages 826-831, XP002339877**
• **JOHNSON K J ET AL: "High-speed peak matching algorithm for retention time alignment of gas chromatographic data for chemometric analysis" JOURNAL OF CHROMATOGRAPHY A, ELSEVIER, AMSTERDAM, NL, vol. 996, no. 1-2, 9 May 2003 (2003-05-09), pages 141-155, XP004427349 ISSN: 0021-9673**
• **MALMQUIST G ET AL: "Alignment of chromatographic profiles for principal component analysis: a prerequisite for fingerprinting methods" JOURNAL OF CHROMATOGRAPHY A, ELSEVIER, AMSTERDAM, NL, vol. 687, no. 1, 9 December 1994 (1994-12-09), pages 71-88, XP004022850 ISSN: 0021-9673**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND ART

The present invention relates to calibrating a sample peak pattern.

There exist a variety of different techniques for analyzing compounds of an unknown sample. In order to analyze the unknown sample, a sample peak pattern might be acquired, with the peaks representing compounds of the unknown sample. However, before the sample peak patterns can be used for further analysis, they have to be calibrated with regard to calibration samples comprising a set of known components. For example, in the field of DNA analysis or protein analysis, calibration samples comprising a set of well-known DNA fragments or proteins are employed. Before the calibration can be performed, the sample peak pattern has to be aligned relative to the one or more calibrations peak patterns. The accuracy of the calibration strongly depends on the accuracy of this alignment step.

Parrish M E et al in "Computer-Enhanced High-Resolution Gas Chromatography for the Discriminative Analysis of Tobacco Smoke", Anal. Chem., vol. 53, no. 6, May 1981 (1981-05), p. 826-831, describes a linear transformation based on peaks present in each chromatogram and recognizable by a user.

US 5,119,315 A discloses aligning a time record of sample data, such as a mass chromatogram of an unknown substance, with a time record of reference data, such as a mass chromatogram of a known substance.

DISCLOSURE OF THE INVENTION

It is an object of the invention to provide an improved time alignment of a sample peak pattern. The object is solved by the independent claim(s). Preferred embodiments are shown by the dependent claim(s).

[deleted]

According to the invention, the time scale is divided into n-1 subintervals, and for each of the subintervals, the original time scale is converted into a transformed time scale. Thus, it can be accomplished that each of the measured reference peaks is shifted to a corresponding reference position of said reference peak. This is accomplished by defining, for each subinterval delimited by two adjacent reference peaks, a linear transformation, whereby the linear transformation is set up in a way that both the left reference peak and the right reference peak are shifted to their corresponding reference positions, respectively. Thus, a piecewise transformation of the original time scale is defined.

In general, reference positions of the calibration peak pattern's reference peaks are well-known. For example, these reference positions might be provided by a manufacturer of calibration samples. Alternatively, these reference positions may be determined by performing a large number of reference measurements, and by averaging the measured positions of the reference peaks.

By applying the set of n-1 linear transformations, the original time scale is converted into a transformed time scale such that all the reference peaks are shifted to their reference positions. Thus, any non-linear distortions and artifacts introduced by the measurement set-up can be compensated. By applying the set of linear transformations, comparability of calibration peak patterns acquired at different times with different measuring systems can be ensured. Furthermore, the set of n-1 linear transformations might as well be applied to sample peak patterns. Thus, sample peak patterns and calibration peak patterns acquired at different times with different measurement set-ups become comparable.

According to a preferred embodiment, the n reference peaks of the calibration peak pattern correspond to n labelled fragments contained in a calibration sample.

In yet another preferred embodiment, the $i^{th}$ linear transformation is defined as $t'_i = scale_i \cdot t_i + bias_i$, with $t_i$ denoting an original time, with $t'_i$ denoting a transformed time, with $scale_i$ denoting a scaling factor, and with $bias_i$ denoting an offset. The $i^{th}$ linear transformation is applied to the $i^{th}$ subinterval. The parameters $scale_i$ and $bias_i$ can be chosen such that the respective positions of the $i^{th}$ reference peak and the $i+1^{th}$ reference peak are shifted to their corresponding reference positions, respectively.

According to another preferred embodiment, a first calibration peak pattern is acquired before a sample peak pattern is acquired, and a second calibration peak pattern is acquired after a sample peak pattern is acquired. Then, a first set of linear transformations is determined from the first calibration peak pattern, and a second set of linear transformations is determined from the second calibration peak pattern. From the first and the second set of linear transformations, an interpolated set of n-1 linear transformations is derived, which is applied to the corresponding n-1 subintervals of the sample peak pattern. Preferably, the interpolation is performed according to the respective measuring times of the first calibration peak pattern, the sample peak pattern and the second calibration peak pattern.

According to the invention, the method comprises a step of applying the n-1 linear transformations to the corresponding n-1 subintervals of a sample peak pattern of a sample of interest.

By applying the n-1 linear transformations to a calibration peak pattern or a sample peak pattern, the transformed peak patterns can be related to one common time scale. Thus, calibration peak patterns and sample peak patterns acquired at different times with different measurement set-ups become comparable. Furthermore, it is possible to assign a common size axis both to calibration peak patterns and sample peak patterns, whereby the common size axis might indicate the compounds' respective sizes in terms of base pairs.

According to a preferred embodiment, the method further comprises a step of re-sampling the sampled data values of at least one of the calibration peak pattern and the sample peak pattern in a way that an equidistant spacing between adjacent sampled data values is accomplished. Thus, further processing of the adjusted calibration peak pattern is simplified.

A method for calibrating a sample peak pattern with regard to a first and a second calibration peak pattern is performed as follows : The respective peak patterns are acquired at different times. The calibration peak patterns each comprise a first reference peak and at least one second reference peak, and the sample peak pattern comprises a first reference peak, at least one of the second reference peaks, and any number of peaks of species of interest. The method comprises a first step of aligning at least one second reference peak of the first calibration peak pattern with at least one corresponding second reference peak of the second calibration peak pattern. The method further comprises a step of performing an interpolation of the respective positions of the first reference peak in the first and the second calibration peak pattern, in order to derive a time dependence of the first reference peak's position. The method further comprises a step of aligning the sample peak pattern relative to at least one of the calibration peak patterns in a way that

- the sample peak pattern's first reference peak is aligned with an interpolated position of the first reference peak according to the time dependence determined in the preceding step, and that

- at least one of the sample peak pattern's second reference peaks is aligned with at least one corresponding second reference peak of the calibration peak patterns.

The positions of peaks related to different compounds might be subjected to different types of time dependence. There might be a slight variation of the measuring conditions as a function of time. Because of the different chemical structure of the samples' compounds, a small variation of the measuring conditions may affect the compounds in different ways. Accordingly, the peaks of the sample peak pattern and of the calibration peak patterns might be subjected to different types of time dependence. In particular, a relative time drift of one peak relative to other peaks might be observed.

The calibration peak patterns each comprise a first reference peak and one or more second reference peaks. In addition to peaks related to species of interest, the sample peak pattern also comprises the first reference peak and at least one of the second reference peaks. If there is a time drift of the first reference peak's position relative to the at least one second reference peak's position, this time drift can be derived from the two calibration peak patterns, which have been acquired at different times. One or more of the second reference peaks of the first calibration peak pattern are aligned with corresponding second reference peaks of the second calibration peak pattern. Then, the first reference peak's position is known at two different times, and a time dependence of the first reference peak's position can be derived there from. Now, the time dependence of the first reference peak's position is known.

Next, the sample peak pattern is aligned relative to at least one of the calibration peak patterns. The point in time when the sample peak pattern has been acquired is known. From the known time dependence of the first reference peak's position, it is possible to derive an interpolated position of the first reference peak that corresponds to the point in time when the sample peak pattern has been measured. Now, the measured position of the sample peak pattern's first reference peak can be aligned with this interpolated position derived from the first and the second calibration peak pattern. Additionally, at least one of the sample peak pattern's second reference peak is aligned with at least one corresponding second reference peak of one of the calibration peak patterns.

By considering the relative time drift between different reference peaks of the calibration peak pattern, it is possible to perform a high-precision alignment of the sample peak pattern's reference peaks relative to the calibration peak patterns' reference peaks. The alignment step is a necessary prerequisite for subsequent calibration steps. For this reason, the precision of a subsequent calibration is also improved.

For determining the time dependence of the first reference peak's position, a linear interpolation between the first reference peak's position in the first and in the second calibration peak pattern is performed. In general, the first reference peak's time drift is substantially a linear time drift.

The sample peak pattern is acquired by analyzing a sample of interest. In addition to various species of interest, the sample of interest comprises a marker and at least one labelled fragment, whereby the sample peak pattern's first reference peak corresponds to the marker, and whereby the one or more second reference peaks of the sample peak pattern correspond to the one or more labelled fragments. It is common practice to add a marker and at least one labelled fragment to a sample of interest, in order to be able to perform a calibration of the obtained sample peak pattern. For example, a rather small molecule might be used as a marker molecule, whereas the labelled fragments are molecules of considerable size. Therefore, the migration behaviour of the marker might differ significantly from the labelled fragments' migration behaviour, and a time drift between the first reference peak and the at least one second reference peaks might be observed.

The first and the second calibration peak pattern are acquired by analyzing compounds of a calibration sample, with the calibration sample comprising the marker and a set of labelled fragments. Further preferably, the calibration peak patterns' first reference peak corresponds to the marker, whereas the one or more second reference peaks of the calibration peak patterns relate to the set of labelled fragments.

A so-called ladder may be used as a calibration sample. A ladder is a calibration sample comprising a plurality of well-known components, whereby the name "ladder" is due to the fact that the calibration peak pattern looks like a "ladder" of peaks related to the various components. For example, in the field of DNA analysis and protein analysis, many manufacturer offer ladders for calibration purposes.

The compounds of the calibration sample and of the sample of interest are separated in a separation flow path. For example, the respective samples may be provided to an input of the separation flow path, and at the separation flow path's outlet, separated compounds of the sample may be obtained as a function of time. The separation flow path might e.g. be implemented as a separation column filled with some kind of packing material. Preferably, one of the following separation techniques is used: electrophoresis, chromatography, electrochromatography.

The sample peak pattern and the calibration peak patterns may be obtained by detecting fluorescence intensity of compounds that have been separated in a preceding separation flow path. The marker is a fluorescence marker, and the fragments of the calibration sample are labelled with fluorescence tags. Also the compounds of the sample of interest are labelled with fluorescence tags. Accordingly, the respective peak patterns are acquired by detecting fluorescence intensity as a function of time.

The marker may emit fluorescence light of a first wavelength, whereas the labelled fragments may emit fluorescence light of a second wavelength, which is different from the first wavelength. Some of the available ladders comprise two or more different fluorescence dyes adapted for emitting fluorescence light of two or more different wavelengths. Correspondingly, there exist fluorescence detection units adapted for simultaneously tracking fluorescence intensity at two or more different wavelengths.

The sample peak pattern may be measured between the first and the second calibration peak pattern. Thus, the interpolation of the first reference peak's position becomes more accurate.

The invention can be partly or entirely embodied or supported by one or more suitable software programs, which can be stored on or otherwise provided by any kind of data carrier, and which might be executed in or by any suitable data processing unit.

BRIEF DESCRIPTION OF DRAWINGS

Other objects and many of the attendant advantages of embodiments of the present invention will be readily appreciated and become better understood by reference to the following more detailed description of preferred embodiments in connection with the accompanied drawing(s). Features that are substantially or functionally equal or similar will be referred to with the same reference sign(s).

Fig. 1 shows a measurement set-up;
Fig. 2 depicts two fluorescence intensity signals related to a calibration sample;
Fig. 3 shows two fluorescence intensity signals related to a sample of interest;
Fig. 4A shows measured peaks in dependence on an absolute time scale;
Fig. 4B shows an alignment of peak patterns according to the prior art;
Fig. 4C shows an alternative alignment of peak patterns;
Fig. 5 illustrates a relative time drift of the lower marker peak LM relative to the ladder peaks;
Fig. 6 shows the effects of global alignment and piecewise alignment; and
Fig. 7 depicts how a piecewise alignment is performed.

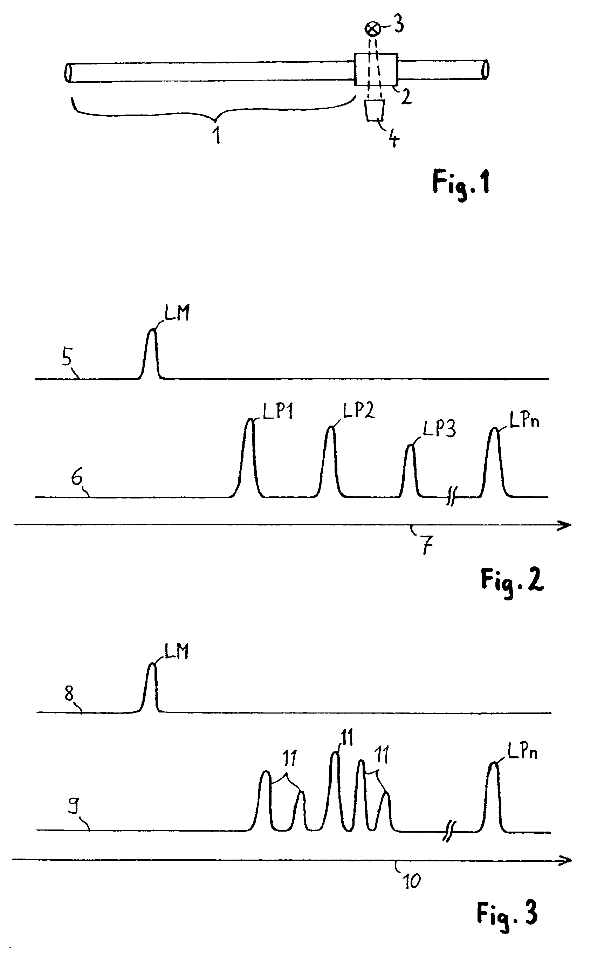

Fig. 1 shows a measurement set-up for separating and analyzing a fluid sample comprising a plurality of different sample compounds. Each of the sample's compounds is characterized by an individual migration time required for travelling through a separation flow path 1. The separation flow path 1 might e.g. be an electrophoresis flow path, a chromatography flow path, or an electrochromatography flow path. At the outlet of the separation flow path 1, a detection cell is located. The detection cell might e.g. be implemented as an fluorescence detection cell 2 comprising a light source 3 and a fluorescence detection unit 4. The fluorescence detection cell 2 is adapted for detecting sample bands of fluorescence labelled species as a function of time.

Before a sample comprising a plurality of unknown species can be analyzed, the measurement set-up shown in Fig. 1 has to be calibrated. For this purpose, there exist a large variety of different calibration samples comprising a set of well-known compounds of different size. These compounds can be separated and analyzed by a measurement set-up as shown in Fig. 1, whereby a characteristic calibration peak pattern is obtained. For each compound of the calibration sample, the calibration peak pattern comprises a respective calibration peak. Because the set of calibration peaks look like a ladder, calibration samples are often referred to as "ladders". A lot of manufacturers produce calibration samples or "ladders" for electrophoresis systems, chromatography systems or electrochromatography systems. In the field of DNA analysis, ladders comprising a set of different DNA fragments are used, whereas in the field of protein analysis, calibration samples comprising a set of different proteins are used.

In case fluorescence detection is used for detecting different species, ladders comprising fragments labelled with fluorescence tags are employed. When the species of the calibration sample are stimulated with incident light, the tags attached to the species emit fluorescence light. There also exist calibration samples or "ladders" comprising a marker that fluoresces at a first wavelength, and a set of labelled fragments that emit fluorescent light at a second wavelength.

Fig. 2 shows two different fluorescence intensity signals 5, 6 as a function of time. The two fluorescence intensity signals 5, 6 have been acquired by detecting fluorescence intensity at two different wavelengths. The signals of Fig. 2 relate to a calibration sample comprising a marker and a set of labelled fragments. The marker is a small dye molecule adapted for emitting red fluorescence light. In general, the labelled fragments are larger in size than the marker. They are labelled with fluorescence tags adapted for emitting green fluorescence light. In addition to the fluorescence intensity signals 5, 6, a time axis 7 is shown. First, the small marker molecules appear at the separation column's outlet, and accordingly, a lower marker peak LM appears in the fluorescence intensity signal 5 related to red fluorescence light. Next, the labelled fragments arrive at the detection cell, whereby small, light fragments migrate through the separation column more quickly than large, heavy fragments. Hence, the fluorescence intensity signal 6 related to green fluorescence light comprises a set of ladder peaks LP1, LP2, LP3, ... LPn, with ladder peak LP1 corresponding to the smallest labelled fragment, and with LPn corresponding to the largest labelled fragment.

After the fluorescence peak pattern of the calibration sample has been acquired, a sample of interest is analyzed. In order to allow for an alignment with the calibration peak pattern, a certain concentration of the marker and a certain concentration of the largest labelled ladder fragment is added to the sample of interest. Then, the compounds of the sample of interest are separated, and the sample bands obtained at the separation column's outlet are analyzed.

Fig. 3 shows two fluorescence intensity signals 8, 9 obtained by analysing the sample of interest. The fluorescence intensity signal 8 relates to red fluorescence light, whereas the fluorescence intensity signal 9 relates to green fluorescence light. Furthermore, a time axis 10 is shown. First, the marker appears at the column's outlet, and a corresponding lower marker peak LM shows up in the fluorescence intensity signal 8. Next, sample bands related to compounds of the sample of interest arrive at the fluorescence detection cell. The sample compounds have been labelled with a fluorescence tag adapted for emitting green fluorescence light. Accordingly, the fluorescence intensity signal 9 comprises peaks 11 that correspond to these sample compounds. At last, the largest labelled fragment appears at the detection cell, and accordingly, the fluorescence intensity signal 9 comprises a ladder peak LPn.

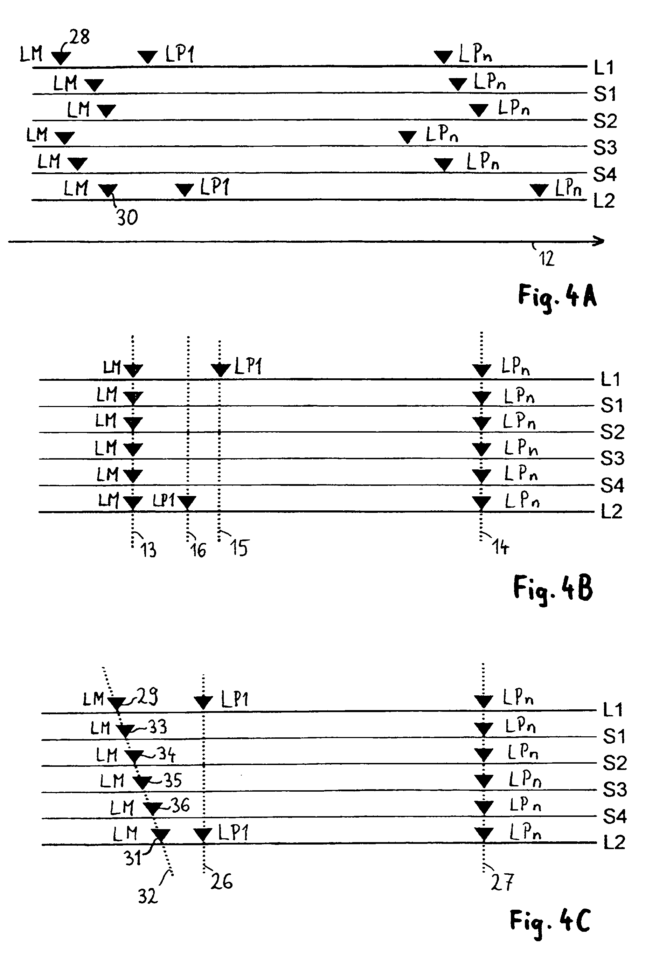

Fig. 4A shows a sequence of measurements comprising both calibration measurements and sample measurements. First, a calibration sample or ladder L1 is analyzed, then, sample peak patterns of samples S1 to S4 are acquired, and at last, a calibration peak pattern of a ladder L2 is measured. Below the measurements, a time axis 12 indicates an absolute time scale that has been used for recording the peak patterns. For each of the two calibration sample measurements L1 and L2, the respective positions of the lower marker peak LM, of the first labelled fragment's peak LP1, and of the last labelled fragment's peak LPn are indicated. For each of the sample measurements S1 to S4, the position of the lower marker peak LM and the position of the last labelled fragment's peak LPn are indicated.

The time axis 12 indicates an absolute time scale that has been used for recording the peak patterns. From Fig. 4A, it can be seen that the absolute time positions of corresponding peaks vary considerably. Furthermore, also the time intervals between the lower marker peak LM and the last labelled fragment's peak LPn vary to some extent. This variation indicates a compression or an expansion of the absolute time scale, which might e.g. be caused by fluctuations of the solvent composition, by chemical modifications of the column's packing material, or by any other changes of the measuring environment.

For these reasons, in order to achieve comparability between the peak patterns, it is necessary to convert the absolute time scale into a relative time scale and to align the peaks of the sample peak pattern relative to the peaks of the calibration peak patterns.

According to a solution of the prior art, which is depicted in Fig. 4B, a first fixed time value 13 is assigned to the lower marker peaks LM of the calibration measurements L1 and L2 and to the lower marker peaks LM of the sample measurements S1 to S4. Furthermore, a second fixed time value 14 is assigned to the respective peaks LPn of the measurements L1, L2, S1 to S4. As a consequence, the positions of the respective lower marker peaks LM are aligned, and the positions of the respective ladder peaks LPn are aligned.

By assigning fixed time values to the peaks LM and LPn of each peak pattern, respectively, a relative time scale is set up for each of the peak patterns L1, S1 to S4, L2. Now, the peaks' absolute time values, which are depicted in Fig. 4A, can be converted into corresponding relative time values of this relative time scale.

However, the prior art solution shown in Fig. 4B has some shortcomings. When converting the absolute time position of peak LP1 of calibration measurement L1 into a corresponding relative time value, a relative time value 15 of peak LP1 is determined. When converting the absolute time value of peak LP1 of calibration measurement L2 into a corresponding relative time value, a relative time value 16 of peak LP1 is obtained. Obviously, the relative time value 16 of peak LP1 derived from calibration measurement L2 does not match with the relative time value 15 obtained from calibration measurement L1.

This means that the ratio $\left(\dfrac{\Delta T_{LM}^{LP1}}{\Delta T_{LP1}^{LPn}}\right)_{L1}$ derived from

calibration measurement L1 differs from the ratio

$$\left(\frac{\Delta T_{LM}^{LP1}}{\Delta T_{LP1}^{LPn}}\right)_{L2} \text{ derived from L2:}$$

$$\left(\frac{\Delta T_{LM}^{LP1}}{\Delta T_{LP1}^{LPn}}\right)_{L1} \neq \left(\frac{\Delta T_{LM}^{LP1}}{\Delta T_{LP1}^{LPn}}\right)_{L2}$$

with $\Delta T_{LM}^{LP1}$ denoting the time interval between LM and LP1 according to the absolute time scale of Fig. 4A, and with $\Delta T_{LP1}^{LPn}$ denoting the time interval between LP1 and LPn according to the absolute time scale of Fig. 4A.

This effect is due to a relative time drift between the position of the lower marker peak LM and the positions of the labelled fragments' peaks LP1 to LPn. The fragments are labelled with a fluorescence tag, whereas the marker is a free dye that is not bound to any fragment. When passing through the separation column, the migration behaviour of the free dye differs considerably from the migration behaviour of the labelled fragments.

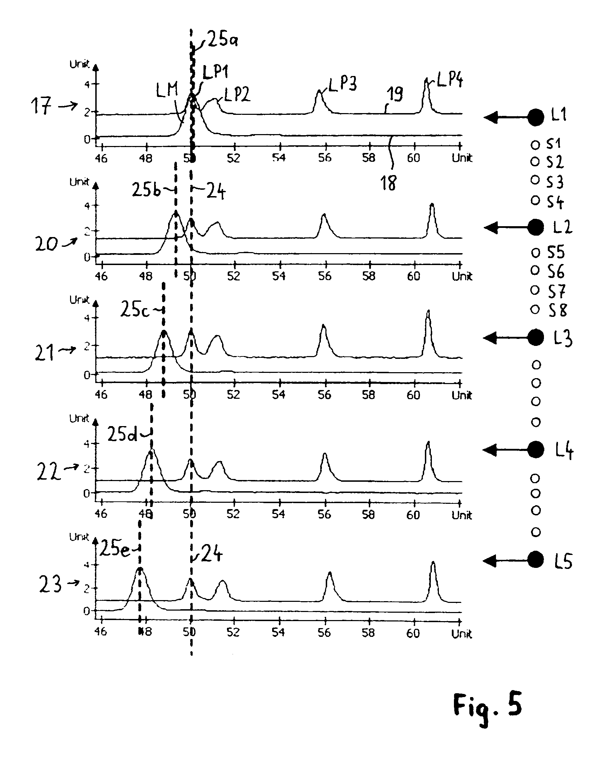

Fig. 5 illustrates the relative time drift of the lower marker peak's position relative to the peak positions of the other ladder peaks. Fig. 5 shows a set of different calibration peak patterns that have been recorded at different points in time. First, the calibration measurement L1 is performed, then, four sample measurements S1 to S4 are acquired, followed by another calibration measurement L2. After the calibration measurement L2 has been carried out, another set of four sample measurements S5 to S8 is performed, followed by a third calibration measurement L3. This sequence of calibration measurements is continued, whereby further calibration measurements L4, L5 are performed. The first diagram 17 of Fig. 5 relates to the calibration measurement L1. The first fluorescence intensity signal 18 comprises a lower marker peak LM, whereas the second fluorescence intensity signal 19 comprises four ladder peaks LP1, LP2, LP3, LP4. The following diagrams 20 to 23 relate to the calibration measurements L2 to L5, respectively. It can be seen that the respective positions of the ladder peaks LP1 to LP4 remain unchanged, whereas there is a time drift of the lower marker peak LM relative to the ladder peaks LP1 to LP4. Relative to the position 24 of ladder peak LP1, the respective positions 25a to 25e of the lower marker peak LM are continuously moving as a function of time.

The relative time drift between the peak positions of the marker on the one hand and the labelled fragments on the other hand has to be taken into account when aligning the peak patterns shown in Fig. 4A. According to embodiments of the present invention, it is proposed to perform the alignment in a way shown in Fig. 4C. In a first step, the first ladder peak LP1 and the last ladder peak LPn of calibration measurement L1 are aligned with the ladder peaks LP1 and LPn of calibration sample L2. This can e.g. be done by assigning a first fixed time value 26 to ladder peak LP1 of calibration measurement L1 and to ladder peak LP1 of calibration measurement L2, and by assigning a second fixed time value 27 to ladder peak LPn of calibration measurement L1 and to ladder peak LPn of calibration measurement L2. As a result of this assignment, peak LP1 of L1 is aligned with peak LP1 of L2, and furthermore, peak LPn of L1 is aligned with peak LPn of L2.

By assigning a first fixed time value to LP1 and a second fixed time value to LPn, both for calibration measurement L1 and for calibration measurement L2, a relative time scale is established. Hence, both for L1 and L2, the absolute time scale, which has been used for measuring the peak patterns, is transformed to a relative time scale.

Using the relative time scale of L1, the absolute time value 28 of the lower marker peak LM shown in Fig. 4A can be converted into a corresponding relative time value 29. Accordingly, the absolute time value 30 of the lower marker peak LM shown in Fig. 4A can be converted into a corresponding relative time value 31.

In general, the relative time value 29 differs from the relative time value 31. However, from these two values, a time drift of the lower marker's peak position relative to the ladder peaks can be derived, preferably by performing a linear interpolation. In Fig. 4C, the linear time drift of the lower marker peak LM is indicated as a straight line 32. Instead of a linear interpolation, a more complex type of interpolation can be used for modeling the lower marker peak's time drift.

As soon as the time dependence of the lower marker's peak position is known, it is possible to determine interpolated relative time values 33, 34, 35, 36 indicating the lower marker's peak position at the respective points in time when the sample measurements S1 to S4 have been performed.

Now, for each of the sample measurements S1 to S4, the absolute time scale shown in Fig. 4A is transformed into a relative time scale in a way that the position of the lower marker peak LM is aligned with a respective one of the interpolated relative time values 33 to 36, and that the position of the ladder peak LPn is aligned with the second fixed time value 27. For each of the sample measurements S1, S2, S3, S4, a relative time scale is established by assigning a respective one of the relative time values 33 to 36 to the lower marker peak LM, and by assigning the second fixed time value 27 to the ladder peak LPn. Thus, the absolute time values are converted into corresponding relative time values, whereby the lower marker peak's time drift is taken into account.

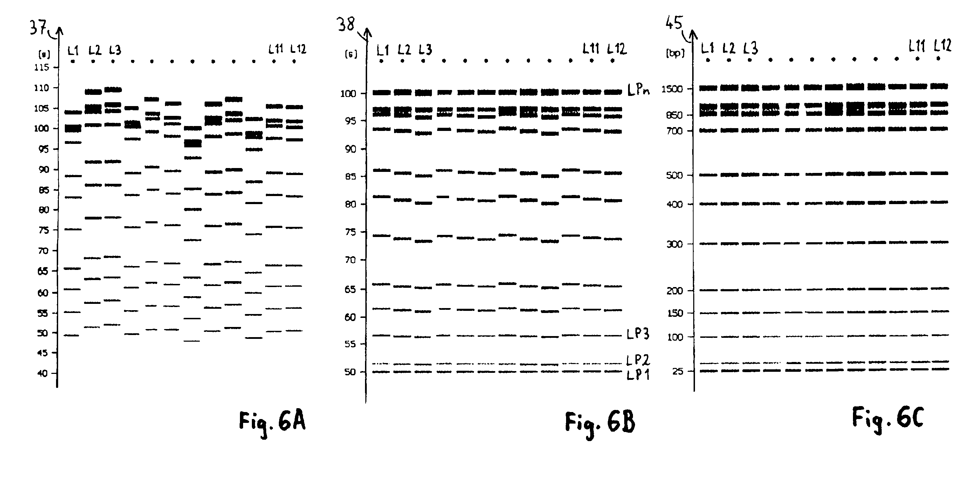

In Fig. 6A, measured time values of the ladder peaks LP1 to LPn are shown before an alignment is performed. The time axis 37 indicates an absolute time scale that has been used when acquiring the data. The data shown in Fig. 6A relates to 12 different calibration measurements L1 to L12.

Fig. 6B shows the same data after an alignment according to Fig. 4C has been performed. On the left side, a time axis 38 indicating a relative time scale is shown, with the relative time scale being determined in accordance with Fig. 4C. For each of the 12 calibration measurements L1 to L12, the respective peak positions of the ladder peaks LP1 to LPn are indicated. From Fig. 6B, it can be seen that both the first ladder peaks LP1 and the last ladder peaks LPn are perfectly aligned, whereas the peak positions of the other ladder peaks LP2 to LP(n-1) may still vary. However, this variation is much smaller in scale than the marker's drift that has been described above. Furthermore, this variation is not related to the different chemical structures of the marker and the labelled fragments, but is rather due to other types of fluctuations of the measuring set-up.

Therefore, in addition to the global alignment shown in Fig. 4C, which is performed as a first step, a subsequent piecewise alignment is carried out.

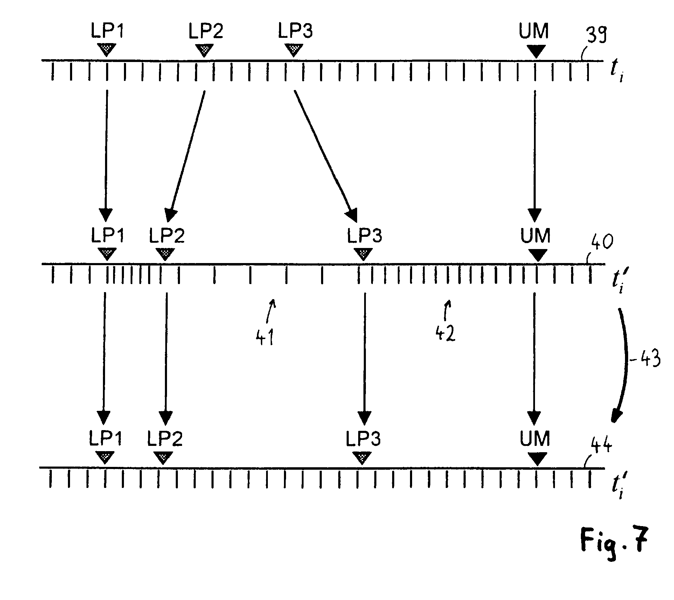

Fig. 7 shows how to perform a piecewise alignment of a calibration peak pattern. The piecewise alignment is performed with regard to a set of reference time values of the ladder peaks LP1 to LPn. For each ladder peak LPi, a reference time value $T'_i$ indicating the ladder peak's reference position is provided, whereby the set of reference time values $T'_i$, $1 \leq i \leq n$ is specified on a relative time scale. The set of reference time values might e.g. be obtained from a manufacturer of a calibration sample. Alternatively, the reference positions of the ladder peaks might be determined by performing a large number of reference measurements of a calibration sample, and by determining average values of the calibration peaks' relative time values.

In the upper part of Fig. 7, a relative time scale 39 is shown, whereby the ladder peaks LP1, LP2, ... LPn are those obtained after a global alignment according to Fig. 4C has been performed. First, a set of time intervals $[T_i; T_{i+1}]$ is defined, with $T_i$ denoting the relative time value of ladder peak LPi, and with $T_{i+1}$ denoting the relative time value of ladder peak LP(i+1). For each of the intervals extending from LPi to LP(i+1), a separate linear transformation is defined in a way that the interval $[T_i, T_{i+1}]$ is mapped to a corresponding target interval $[T'_i, T'_{i+1}]$ of a reference time scale 40. $T'_i$ denotes the reference time value of ladder peak LPi, and $T'_{i+1}$ denotes the reference time value of ladder peak LP(i+1). Thus, a set of (n-1) linear transformations is obtained.

Each of the (n-1) linear transformations might e.g. be defined as:

$$t'_i = scale_i \cdot t_i + bias_i \,,$$

with $scale_i$ denoting a scaling factor, $bias_i$ denoting an offset, $t_i \in [T_i, T_{i+1}]$ denoting a relative time value according to the relative time scale 39, and with $t'_i \in [T'_i, T'_{i+1}]$ denoting a corresponding relative time value of the reference time scale 40. Each of the (n-1) linear transformations is applied to a corresponding subinterval $[T_i, T_{i+1}]$, $1 \leq i \leq n-1$ of the relative time scale 39. By subjecting the calibration peak pattern to this set of piecewise transformations, each ladder peak LPi is mapped to its reference time value $T'_i$.

When the calibration measurement or the sample measurement are performed, sample values are recorded at a constant rate. Therefore, the spacing between neighboring sample values is constant. However, after the time intervals have been mapped to their corresponding target time intervals, the distances between neighboring sample values are either stretched (41) or compressed (42). Therefore, in a next step, a re-sampling 43 of the sample values is performed. As a result, a re-sampled reference time scale 44 is obtained.

The set of linear transformations derived from the calibration peak pattern can be applied to subsequent sample measurements. A first possibility is to apply the set of transformations as derived from a calibration measurement L1 to the subsequent sample measurements S1 to S4. Another possibility is to consider both the calibration measurement L1 that is performed before the sample measurements S1 to S4 are carried out and the calibration measurement L2 performed after the sample measurement S1 to S4 have been carried out. From L1, a first set of linear transformations is derived, and from L2, a second set of linear transformations is derived. For correcting any one of the sample measurements S1 to S4, e.g. S2, an interpolated set of (n-1) linear transformations is derived from the first and the second set of linear transformations.

In Fig. 6C, the calibration peak patterns L1 to L12 are shown after a piecewise alignment according to Fig. 7 has been performed. It can be seen that an alignment of all the ladder peaks LP1, LP2, ... LPn has been accomplished.

By converting both calibration measurements and sample measurements to a reference time scale, it is possible to assign a common time axis both to the ladder peak patterns and the sample peak patterns. Thus, comparability between different calibration measurements and sample measurements is promoted. Furthermore, instead of a time axis indicating relative time values, both the calibrations peak patterns and the sample peak patterns may be calibrated in terms of base pairs. In particular, a size axis 45 indicating the number of corresponding base pairs may be employed. The processed signals may then be used for further analysis, such as .g. profiling.

## Claims

1. A method for providing a time alignment to a sample peak pattern,
   wherein a set of linear transformations is set up with regard to a reference data set comprising data about reference positions of n reference peaks of a calibration peak pattern;
   the method comprising the steps of:

   > splitting up the time axis of the calibration peak pattern into a series of n-1 adjacent subintervals, with an $i^{th}$ subinterval ranging from reference peak i to reference peak i+1 of the calibration peak pattern, with i being a natural number, $2 \leq i < n$;
   > setting up, for each of the n-1 subintervals, a corresponding linear transformation, with the $i^{th}$ linear transformation being adapted for mapping the $i^{th}$ subinterval into a corresponding $i^{th}$ target interval, said $i^{th}$ target interval ranging from the reference position of reference peak i to the reference position of reference peak i+1 of the reference data set; and
   > applying the n-1 linear transformations to the corresponding n-1 subintervals of a sample peak pattern of a sample of interest.

2. The method of claim 1, wherein the calibration peak pattern is acquired by detecting compounds of a calibration sample.

3. The method of claim 2, wherein the calibration sample comprises n labelled fragments, with the n reference peaks of the calibration peak pattern corresponding to the n labelled fragments.

4. The method of claim 1 or any one of the above claims, wherein the $i^{th}$ linear transformation is set up as $t'_i = scale_i \cdot t_i + bias_i$, with $t_i$ denoting an original time, $t'_i$ denoting a transformed time, $scale_i$ denoting a scaling factor, and $bias_i$ denoting an offset.

5. The method of claim 1 or any one of the above claims, wherein a first calibration peak pattern is acquired before the sample peak pattern is acquired, and wherein a second calibration peak pattern is acquired after the sample peak pattern is acquired, the method comprising the steps of
   determining a first set of linear transformations from the first calibration peak pattern,
   determining a second set of linear transformations from the second calibration peak pattern,
   deriving, from the first and the second set of linear transformations, an interpolated set of linear transformations.

6. The method of claim 1 or any one of the above claims,
   further comprising a step of resampling the sampled data values of at least one of the calibration peak pattern and the sample peak pattern by means of linear interpolation in a way that an equidistant spacing between adjacent sampled data values is accomplished.

7. A software program or product, preferably stored on a data carrier, adapted to execute the method of claim 1 or any one of the above claims, when run on a data processing system such as a computer.

## Patentansprüche

1. Verfahren zum Bereitstellen einer zeitlichen Ausrichtung auf ein Peak-Muster,
   worin eine Menge von linearen Transformationen mit Bezug auf eine Referenz-Datenmenge eingerichtet wird, welche Daten über Referenzpositionen von n Referenz-Peaks eines Kalibrierungs-Peak-Musters aufweist;
   wobei das Verfahren die folgenden Schritte aufweist:

   > Unterteilen der Zeitachse des Kalibrierungs-Peak-Musters in eine Reihe von n-1 benachbarten Teilintervallen, wobei ein i-tes Teilintervall vom Referenz-Peak i bis zum Referenz-Peak i+1 des Kalibrierungs-Peak-Musters reicht und i eine ganze Zahl ist mit $2 \leq i < n$;
   > Einrichten einer entsprechenden linearen Transformation für jedes der n-1 Teilintervalle, wobei die i-te lineare Transformation zum Abbilden des i-ten Teilintervalls auf ein entsprechendes i-tes Zielintervall geeignet ist, wobei das i-te Zielintervall von der Referenzposition des Referenz-Peaks i bis zur Referenzposition des Referenz-Peaks i+1 der Referenz-Datenmenge reicht; und
   > Anwenden der n-1 linearen Transformationen auf die entsprechenden n-1 Teilintervalle eines Proben-Peak-Musters einer betrachteten Probe.

2. Verfahren nach Anspruch 1, wobei das Kalibrierungs-Peak-Muster durch das Erkennen von Zusammensetzungen einer Kalibrierprobe erhalten wird.

3. Verfahren nach Anspruch 2, wobei die Kalibrierprobe n **gekennzeichnet**e Fragmente aufweist und die n Referenz-Peaks des Kalibrierungs-Peak-Musters den n **gekennzeichneten** Fragmenten entsprechen.

4. Verfahren nach Anspruch 1 oder einem der vorangehenden Ansprüche, wobei die i-te lineare Transformation als $t'_i = scale_i \cdot t_i + bias_i$ eingerichtet ist,

wobei $t_i$ eine Originalzeit, $t_i'$ eine transformierte Zeit, *scale*$_i$ einen Skalierungsfaktor und *bias*$_i$ einen Versatz bezeichnet.

5. Verfahren nach Anspruch 1 oder einem der vorangehenden Ansprüche,, wobei ein erstes Kalibrierungs-Peak-Musters vor dem Proben-Peak-Muster erfasst wird und ein zweites Kalibrierungs-Peak-Muster erfasst wird, nachdem das Proben-Peak-Muster erfasst wurde, wobei das Verfahren die folgenden Schritte aufweist:

> Ermitteln einer ersten Menge von linearen Transformationen von dem ersten Kalibrierungs-Peak-Muster,
> Ermitteln einer zweiten Menge von linearen Transformationen von dem zweiten Kalibrierungs-Peak-Muster,
> Herleiten einer interpolierten Menge von linearen Transformationen von der ersten und zweiten Menge von linearen Transformationen.

6. Verfahren nach Anspruch 1 oder einem der vorangehenden Ansprüche, das ferner einen Schritt des Neuabtastens der abgetasteten Datenwerte von wenigstens einem der Kalibrierungs-Peak-Muster und des Proben-Peak-Musters durch eine lineare Interpolation aufweist, die so beschaffen ist, dass ein gleicher Abstand zwischen benachbarten abgetasteten Datenwerten erreicht wird.

7. Softwareprogramm oder -produkt, vorzugsweise gespeichert auf einem Datenträger, das so beschaffen ist, dass es das Verfahren nach Anspruch 1 oder einem der vorangehenden Ansprüche ausführt, wenn es auf einem Datenverarbeitungs-System wie z.B. einem Computer betrieben wird.

**Revendications**

1. Procédé permettant d'appliquer un alignement temporel à une combinaison de crêtes d'échantillonnage ;
dans lequel un jeu de transformations linéaires est établi par rapport à un jeu de données de référence comprenant des données concernant des positions de référence de n crêtes de référence d'une combinaison de crêtes d'étalonnage ;
le procédé comprenant les étapes suivantes :

> la séparation de l'axe du temps de la combinaison de crêtes d'étalonnage en une série de n-1 sous-intervalles adjacents, un $i^{ème}$ sous-intervalle étant compris entre une crête de référence i et une crête de référence i+1 de la combinaison de crêtes d'étalonnage, i étant un entier naturel, $2 \leq i < n$ ;

l'établissement, pour chacun des n-1 sous-intervalles, d'une transformation linéaire correspondante, la $i^{ème}$ transformation linéaire étant adaptée pour mapper le $i^{ème}$ sous-intervalle en un $i^{ème}$ intervalle cible correspondant, ledit $i^{ème}$ intervalle cible étant compris entre la position de référence de la crête de référence i et la position de référence de la crête de référence i+1 du jeu de données de référence, et
l'application des n-1 transformations linéaires aux n-1 sous-intervalles correspondants d'une combinaison de crêtes d'échantillonnage d'un échantillon visé.

2. Procédé suivant la revendication 1, dans lequel la combinaison de crêtes d'étalonnage est acquise en détectant des composés d'un échantillon d'étalonnage.

3. Procédé suivant la revendication 2, dans lequel l'échantillon d'étalonnage comprend n fragments étiquetés, les n crêtes de référence de la combinaison de crêtes d'étalonnage correspondant aux n fragments étiquetés.

4. Procédé suivant la revendication 1 ou suivant l'une quelconque des revendications précédentes, dans lequel la $n^{ième}$ transformation linéaire est établie sous la forme $t'_i = scale_i - t_i + bias_i$, $t_i$ indiquant un temps initial, $t'_i$ indiquant un temps transformé, $scale_i$ indiquant un facteur d'échelle et $bias_i$ indiquant un décalage.

5. Procédé suivant la revendication 1 ou suivant l'une quelconque des revendications précédentes, dans lequel une première combinaison de crêtes d'étalonnage est acquise avant que la combinaison de crêtes d'échantillonnage ne soit acquise, et dans lequel une deuxième combinaison de crêtes d'étalonnage est acquise après que la combinaison de crêtes d'échantillonnage a été acquise, le procédé comprenant les étapes suivantes :

> la détermination d'un premier jeu de transformations linéaires à partir de la première combinaison de crêtes d'étalonnage ;
> la détermination d'un deuxième jeu de transformations linéaires à partir de la deuxième combinaison de crêtes d'étalonnage ;
> la dérivation, à partir du premier jeu et du deuxième jeu de transformations linéaires, d'un jeu interpolé de transformations linéaires.

6. Procédé suivant la revendication 1 ou suivant l'une quelconque des revendications précédentes, comprenant en outre une étape de ré-échantillonnage des valeurs de données échantillonnées d'au moins une parmi la combinaison de crêtes d'étalonnage et la combinaison de crêtes d'échantillonnage au moyen d'une interpolation linéaire de manière à obtenir un espace équidistant entre des valeurs de données échantillonnées adjacentes.

7. Programme ou produit logiciel, de préférence stocké sur un support de données, à même d'exécuter le procédé suivant la revendication 1 ou suivant l'une quelconque des revendications précédentes, lorsqu'il est exécuté sur un système de traitement de données tel qu'un ordinateur.

**Fig.1**

**Fig.2**

**Fig.3**

Fig. 4A

Fig. 4B

Fig. 4C

Fig. 5

Fig. 6A

Fig. 6B

Fig. 6C

Fig. 7

EP 1 669 753 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5119315 A

**Non-patent literature cited in the description**

- **PARRISH M E et al.** Computer-Enhanced High-Resolution Gas Chromatography for the Discriminative Analysis of Tobacco Smoke. *Anal. Chem.,* May 1981, vol. 53 (6), 826-831